# EUROPEAN PATENT APPLICATION

(11) **EP 4 838 863 A1**
(43) Date of publication of application: **11.11.2026**
(21) Application number: 25736345.7
(22) Date of filing: 03.01.2025
(51) Int. Cl.: H04L 51/10

(54) **EMOTIONAL INTERACTION METHOD AND APPARATUS, DEVICE, AND STORAGE MEDIUM**

(30) Priority: 05.01.2024 CN 202410023197
(71) Applicant: Beijing Zitiao Network Technology Co., Ltd., Beijing 100190 (CN)
(72) Inventor: LI, Xiyu, Beijing 100028 (CN); SHU, Siqi, Beijing 100028 (CN)
(74) Representative: Marks & Clerk LLP
(86) International application number: PCT/CN2025/070461
(87) International publication number: WO 2025/146141

(57) **Abstract**

Embodiments of the present disclosure relate to a method, an apparatus, a device, and a storage medium for emoji interaction. The method proposed herein includes: determining a target media resource for generating a voice emoji; creating the voice emoji based on a received editing operation, the voice emoji including a visual part and a voice part, the editing operation including at least one of: a first operation for modifying first visual content and/or first voice content included in the target media resource, or a second operation for inputting second visual content and/or second voice content; and posting the voice emoji to enable the voice emoji to be sent to a chat associated with a target user based on a selection by the target user.

## Description

This application claims priority to Chinese Patent Application No. 202410023197.4, filed on January 05, 2024, and entitled "METHOD, APPARATUS, DEVICE AND STORAGE MEDIUM FOR EMOJI INTERACTION", the entire content of which is incorporated herein by reference.

### FIELD

Example embodiments of the present disclosure generally relate to the field of computers, and in particular, to a method, an apparatus, a device, and a computer-readable storage medium for emoji interaction.

### BACKGROUND

With the development of computer technologies, the Internet has become an important platform for people to exchange information. In the process of information exchange by people over the Internet, for example, in chat conversations, various types of emoji have become an important medium for social emoji and information exchange of people.

### SUMMARY

In a first aspect of the present disclosure, a method for emoji interaction is provided. The method includes: determining a target media resource for generating a voice emoji; creating the voice emoji based on a received editing operation, the voice emoji including a visual part and a voice part, the editing operation including at least one of: a first operation for modifying first visual content and/or first voice content included in the target media resource, or a second operation for inputting second visual content and/or second voice content; and posting the voice emoji to enable the voice emoji to be sent to a chat associated with a target user based on a selection by the target user.

In a second aspect of the present disclosure, a method for emoji interaction is provided. The method includes: receiving a selection of a voice emoji; and ending the voice emoji to a target chat, the voice emoji including a visual part and a voice part, where the voice emoji is created based on an editing operation associated with a target media resource, the editing operation including at least one of: a first operation for modifying first visual content and/or first voice content included in the target media resource, or a second operation for adding second visual content and/or second voice content.

In a third aspect of the present disclosure, a method for emoji creation is provided. The method includes: presenting a first set of candidate visual content determined based on target voice content; and creating a voice emoji based on a selection for first visual content in the first set of candidate visual content, the voice emoji including a visual part and a voice part, where the visual part is determined based on the first visual content, and the voice part is determined based on the target voice content.

In a fourth aspect of the present disclosure, a method for emoji creation is provided. The method includes: presenting, based on target text content, a second set of candidate visual content determined based on the target text content; and creating a voice emoji based on a selection of second visual content from the second set of candidate visual content, the voice emoji including a visual part and a voice part, where the visual part is determined based on the target visual content, and the voice part is generated based on the target text content.

In a fifth aspect of the present disclosure, an apparatus for emoji interaction is provided. The apparatus includes: a determination module configured to determine a target media resource for generating a voice emoji; a creation module configured to create the voice emoji based on a received editing operation, the voice emoji including a visual part and a voice part, the editing operation including at least one of: a first operation for modifying first visual content and/or first voice content included in the target media resource, or a second operation for inputting second visual content and/or second voice content; and a posting module configured to post the voice emoji to enable the voice emoji to be sent to a chat associated with a target user based on a selection by the target user.

In a sixth aspect of the present disclosure, an electronic device is provided. The device includes at least one processing unit; and at least one memory coupled to the at least one processing unit and storing instructions for execution by the at least one processing unit, the instructions, when executed by the at least one processing unit, causing the electronic device to perform the method of any of the first aspect to the fourth aspect.

In a seventh aspect of the present disclosure, a computer-readable storage medium is provided. The computer-readable storage medium has a computer program stored thereon, the computer program being executable by a processor to implement the method of any of the first aspect to the fourth aspect.

It should be understood that the summary described in this disclosure is not intended to limit key features or important features of implementations in the present disclosure, nor is it intended to limit the scope in the present disclosure. Other features in the present disclosure will become readily understood from the following description.

### BRIEF DESCRIPTION OF THE DRAWINGS

The above and other features, advantages and aspects of the embodiments of the present disclosure will become more apparent in combination with the drawings and with reference to the following detailed description. In the drawings, the same or similar reference symbols refer to the same or similar elements, where:
Fig. 1 illustrates a schematic diagram of an example environment in which embodiments according to the present disclosure may be implemented;
Fig. 2 illustrates a flowchart of an example process of emoji interaction according to some embodiments of the present disclosure;
FIGS. 3A to 3E illustrate example interfaces according to some embodiments of the present disclosure;
Fig. 4 illustrates a flowchart of an example process of emoji interaction according to some embodiments of the present disclosure;
FIGS. 5A to 5B illustrate example interfaces according to some embodiments of the present disclosure;
Fig. 6 illustrates a flowchart of an example process of emoji creation according to some embodiments of the present disclosure;
Fig. 7 illustrates a flowchart of an example process of emoji creation according to some embodiments of the present disclosure;
Fig. 8 illustrates a schematic structural block diagram of an example apparatus for emoji interaction according to some embodiments of the present disclosure; and
Fig. 9 illustrates a block diagram of an electronic device capable of implementing a plurality of embodiments of the present disclosure.

### DETAILED DESCRIPTION OF EMBODIMENTS

The embodiments in the present disclosure will be described in more detail below with reference to the accompanying drawings. Although certain embodiments in the present disclosure are shown in the drawings, it would be appreciated that the present disclosure can be implemented in various forms and should not be interpreted as limited to the embodiments described in this specification. On the contrary, these embodiments are provided for a more thorough and complete understanding in the present disclosure. It would be appreciated that the accompanying drawings and embodiments in the present disclosure are only for the purpose of illustration and are not intended to limit the scope of protection in the present disclosure.

It should be noted that the headline of any section/subsection provided in the specification is not limiting. Various embodiments are described throughout the specification, and any type of embodiments may be included in any section/subsection. Furthermore, the embodiments described in any section/subsection may be combined in any manner with any other embodiment described in the same section/subsection and/or different sections/subsections.

In the description of the embodiments of the present disclosure, the term "including" and similar terms would be appreciated as open-ended inclusion, that is, "including but not limited to". The term "based on" would be appreciated as "at least partially based on". The term "one embodiment" or "the embodiment" would be appreciated as "at least one embodiment". The term "some embodiments" would be appreciated as "at least some embodiments". Other explicit and implicit definitions may also be included below. The terms "first," "second," and the like may refer to different or same objects. Other explicit and implicit definitions may also be included below.

The embodiments in the present disclosure may relate to user data, acquisition and/or use of data, and the like. These aspects shall comply with the requirements of corresponding laws, regulations and relevant provisions. In the embodiments in the present disclosure, the collection, acquisition, processing, manufacturing, forwarding, use of all data and the like are carried out with user's knowledge and consent. Accordingly, in the implementation of the embodiments in the present disclosure, users should be informed of the type, the scope of use, the use scenario, etc., of the involved data or information in an appropriate manner and provide authorization in accordance with relevant laws and regulations. The specific ways of being informed and providing authorization may vary according to actual circumstances and application scenarios, and the scope of this disclosure is not limited in this regard.

In the solutions and embodiments in this disclosure, if personal information processing is involved, it will be carried out based on legitimate grounds (such as obtaining consent from the data subject, or as required to fulfill a contract, etc.) and will be performed only within a specified or agreed scope. If users decline the processing of personal information beyond what is essential for basic functionalities, their utilization of these basic features remains uninterrupted.

In the process of information interaction by people through the Internet, people expect to conveniently express desired information by using high-quality emojis. Traditional emoji resources are difficult to comprehensively express the information that people intend to convey

The embodiments of the present disclosure provide an emoji interaction solution. According to this solution, a target media resource for generating a voice emoji may be determined. Further, a voice emoji may be created based on a received editing operation, where the voice emoji includes a visual part and a voice part.

Such an editing operation may include at least one of: a first operation for modifying first visual content and/or first voice content included in the target media resource, or a second operation for inputting second visual content and/or second voice content.

Further, the voice emoji may be posted to enable the voice emoji to be sent to a chat associated with a target user based on a selection by the target user.

In this way, the embodiments of the present disclosure are able to support the user to create a voice emoji by editing a media resource, thereby improving the production efficiency of the voice emoji.

Various example implementations of this solution will be described in detail below in further combination with the drawings.

### Example Environment

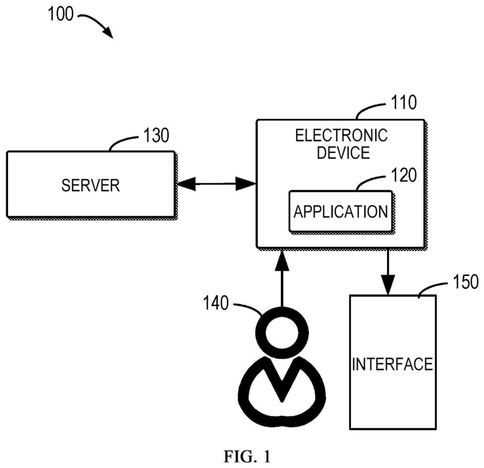

Fig. 1 illustrates a schematic diagram of an example environment 100 in which the embodiments of the present disclosure may be implemented. As shown in Fig. 1, the example environment 100 may include an electronic device 110.

In the example environment 100, the electronic device 110 may run an application 120 that supports interface interaction. The application 120 may be any appropriate type of application for interface interaction, examples of which may include, but are not limited to, a video application, a social application, or other appropriate applications. A user 140 may interact with the application 120 via the electronic device 110 and/or its attached device.

In the environment 100 of Fig. 1, if the application 120 is active, the electronic device 110 may present an interface 150 for supporting interface interaction through the application 120.

In some embodiments, the electronic device 110 communicates with a server 130 to carry out provision of service to the application 120. The electronic device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination thereof, including accessories and peripherals of these devices or any combination thereof. In some embodiments, the electronic device 110 can also support any type of interface for a user (such as a "wearable" circuit, etc.).

The server 130 may be a standalone physical server, a server cluster or a distributed system composed of multiple physical servers, or may also be a cloud server that provides basic cloud computing services such as cloud services, cloud databases, cloud computing, cloud functions, cloud storage, network services, cloud communication, middleware services, domain name services, security services, content distribution networks, and big data and artificial intelligence platforms. The server 130 may include, for example, a computing system/server, such as a mainframe, an edge computing node, a computing device in cloud environments, or the like. The server 130 may provide background services for the application 120 supporting virtual scene in the electronic device 110.

A communication connection may be established between the server 130 and the electronic device 110. The communication connection may be established via wired or wireless manners. The communication connection may include, but is not limited to, a Bluetooth connection, a mobile network connection, a Universal Serial Bus (USB) connection, a Wireless Fidelity (WiFi) connection, and the like, and the embodiments of the present disclosure are not limited in this aspect. In the embodiments of the present disclosure, the server 130 and the electronic device 110 may implement signaling interaction through the communication connection between the server 130 and the electronic device 110.

It should be understood that the structures and functions of the various elements in the environment 100 are described solely for example purposes and do not imply any limitation on the scope of the present disclosure.

Some example embodiments of the present disclosure will be described below with continued reference to the drawings.

### First Example Process

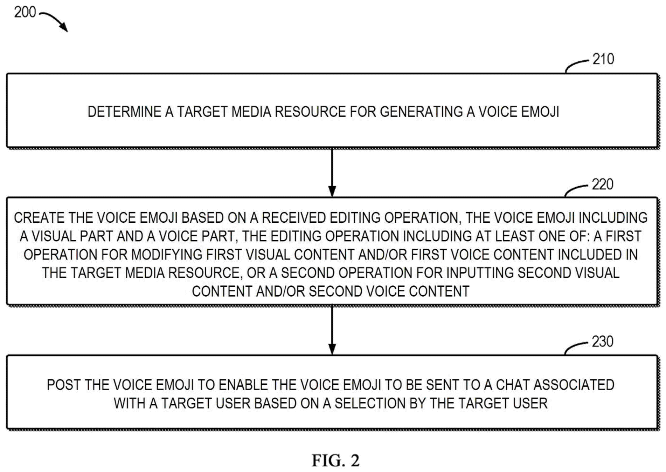

Fig. 2 illustrates a flowchart of an example interaction process 200 according to some embodiments of the present disclosure. The process 200 may be implemented at the electronic device 110. The process 200 is described below with reference to Fig. 1.

As shown in Fig. 2, at block 210, the electronic device 110 determines a target media resource for generating a voice emoji.

In some embodiments, such a target media resource may include any appropriate type of resource including visual content and/or audio content, such as a picture, a video, an audio, an emoji, etc.

In some embodiments, the target media resource may include a media resource input by the user. For example, the user may capture a video, take a picture or record a voice as the target media resource for generating the voice emoji.

In some embodiments, the electronic device 110 may further determine the target media resource for generating the voice emoji based on a selection by the user of the target media resource from candidate media resources.

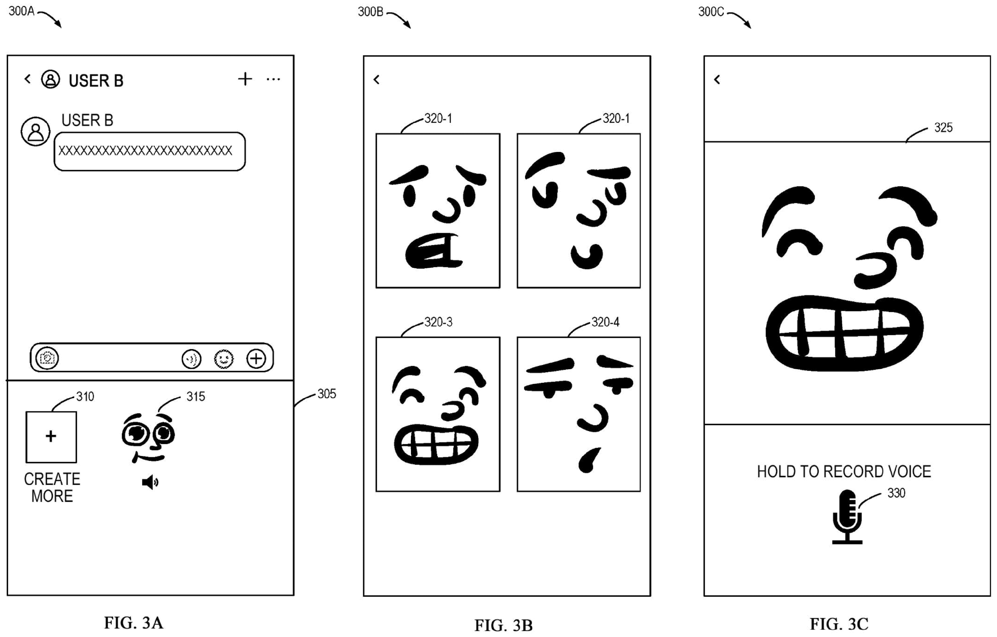

The process 200 will be described below with reference to FIGS. 3A to 3E. FIGS. 3A to 3E illustrate example interfaces 300A to 300E according to some embodiments of the present disclosure. The interfaces 300A to 300E may be provided, for example, by the electronic device 110 shown in Fig. 1.

As shown in Fig. 3A, the interface 300A may be, for example, a chat interface of a chat. The electronic device 110 may display an emoji panel 305 in the interface 300A. As an example, the emoji panel 305 may display added voice emojis, for example, a voice emoji 315.

Additionally, the emoji panel 305 may further include, for example, a creation entry 310. In response to receiving a selection of the creation entry 310, the electronic device 110 may present an interface 300B as shown in Fig. 3B.

In the interface 300B, the electronic device 110 may display a set of candidate images, for example, a candidate image 320-1, a candidate image 320-2, a candidate image 320-3, and a candidate image 320-4 (individually or collectively referred to as candidate images 320). In some embodiments, such candidate images may include static images and/or static images.

In some embodiments, such candidate images 320 ma, for example, be associated with the current user. For example, the candidate images 320 may include images favorited by the current user. As another example, the candidate images 320 may further include images associated with works posted by the current user, for example, image works posted by the current user or video frames of video works posted by the current user.

In some embodiments, with awareness and authorization of the user, the candidate images 320 may further include images local to the electronic device 110.

Further, the electronic device 110 may, for example, receive the selection of the candidate image 320-3 by the user, and may accordingly determine the candidate image 320-3 as the target media resource for generating the voice emoji.

The electronic device 110 may further determine the target media resource for generating the voice emoji based on other appropriate methods. In some embodiments, the electronic device 110 may further support the user to select an available emoji as the target media resource, for example.

In some examples, the emojis available to the user may include image emojis, voice emojis, etc., added by the user; or image emojis, voice emojis, etc., shared by other users.

In some embodiments, the electronic device 110 may present a set of candidate image emojis in the emoji panel 305. As an example, such candidate image emojis may only have a visual part, and do not include a voice part.

Further, the electronic device 110 may receive a selection of a target image emoji from the set of candidate image emojis by the user, and determine the target image emoji as the target media resource.

In some other embodiments, the electronic device 110 may receive a preset operation associated with a first work, and may determine the first work as the target media resource accordingly.

For example, the electronic device 110 may provide a voice emoji creation entry in association with a viewing interface of the first work, and may determine the first work as the target media resource based on the selection of the creation entry by the user.

Continuing to refer to Fig. 2, at block 220, the electronic device 110 creates a voice emoji based on a received editing operation, the voice emoji including a visual part and a voice part, the editing operation including at least one of: a first operation for modifying first visual content and/or first voice content included in the target media resource, or a second operation for inputting second visual content and/or second voice content.

In some embodiments, the electronic device 110 may provide the user with an editing interface for creating the voice emoji.

In some embodiments, the electronic device 110 may modify the first visual content and/or the first voice content included in the target media resource accordingly, based on the first operation of the user in the editing interface.

Taking Fig. 3B as an example, in the case where the target media resource is the candidate image 320-3, the electronic device 110 may, for example, provide an image editing interface for editing the candidate image 320-3. It should be understood that such an image editing interface may support any appropriate type of image editing operation, for example, cropping the image, adding text, adding stickers, applying filters, etc.

For example, as shown in Fig. 3C, the electronic device 110 may display the edited image 325 in the interface 300C. It should be understood that such an image editing process is not necessary. The image 325 may also be the original candidate image 320-3.

Continuing to refer to Fig. 3C, the electronic device 110 may provide a control 330 for adding voice content. For example, in response to the user triggering the control 330, the electronic device 110 may obtain voice content input by the user.

It should be understood that such voice content may include any appropriate audio content, regardless of whether such audio content expresses corresponding text information. For example, the voice content may include a recorded speech spoken by the user, a specific sound in the environment, etc. As another example, the voice content may also include music content with or without lyrics.

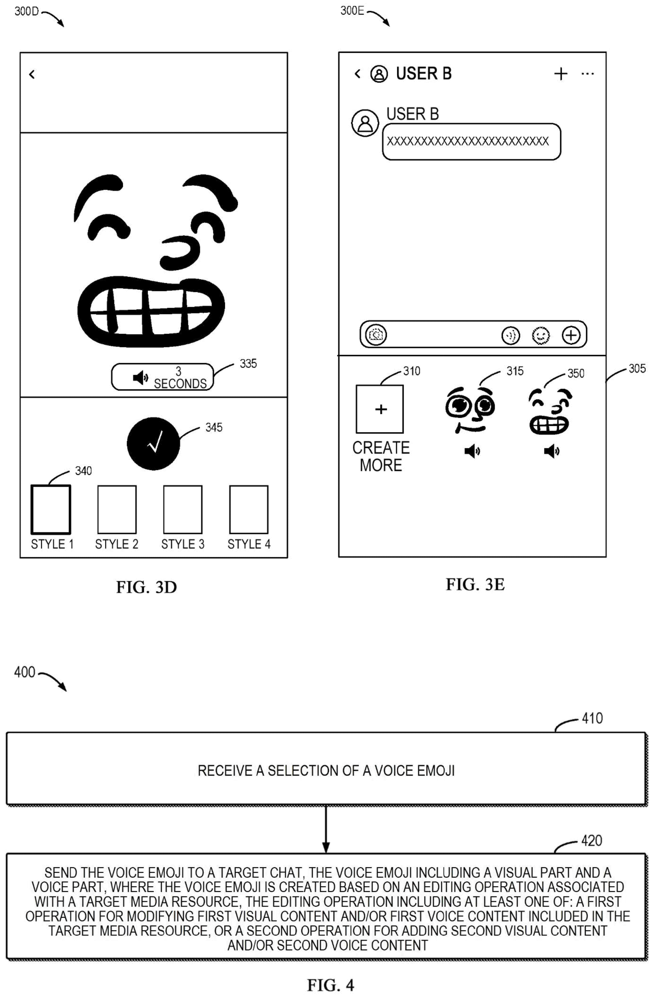

Continuing to refer to Fig. 3D, after the voice content input is completed, the electronic device 110 may , for example, present the interface 300D. In the interface 300D, the electronic device 110 may provide a preview entry 335 for playing the input voice content.

Additionally, the electronic device 110 may further, for example, apply a specific voice style to the input voice content. As shown in Fig. 3D, the electronic device 110 may, for example, provide a set of candidate voice styles 340, and may apply the specified target voice style to the input voice content based on the selection by the user. Such voice styles may correspond to different timbres, intonations, etc.

Taking Fig. 3D as an example, in response to the user selecting a target voice style (for example, "style 1"), the voice content played upon triggering the preview entry 335 may match the target voice style.

In some other embodiments, the electronic device 110 may also support the user to select a target voice style to be applied before inputting the voice content. Accordingly, after the voice content input is completed, the voice content played upon triggering the preview entry 335 may be voice content to which the target voice style has been applied.

Further, the electronic device 110 may create a corresponding voice emoji based on a selection of a completion control 345 by the user. The voice emoji may include a visual part and a voice part.

Accordingly, the visual part may, for example, correspond to the image 325 shown in Fig. 3C. The voice part may correspond to the voice content played upon triggering the preview entry 335.

In some embodiments, in the case where the image 325 is a dynamic image, the voice content of the voice emoji may be temporally aligned with the dynamic image, so that the voice content may, for example, be played from the start frame of the dynamic image.

In some embodiments, the electronic device 110 may further add voice content in other appropriate ways. As an example, the electronic device 110 may provide a set of candidate voice content, and based on the selection of the candidate voice content by the user, may add the candidate voice content to the voice emoji.

As an example, the electronic device 110 may obtain a set of voice materials, which may be created and shared by other users, or may include voice materials provided by the platform. Accordingly, the user may select a specific voice material and combine it with an existing image to generate a corresponding voice emoji.

In some embodiments, the voice content may also be added accordingly, for example, based on text content input by the user. For example, the electronic device 110 may receive the text content input by the user, and may generate voice content matching the text content accordingly to be added to the voice emoji. Alternatively, the electronic device 110 may also search for voice content matching the text content from existing voice materials to be added to the voice emoji.

The creation process of the voice emoji is described above by taking the target media resource including an image as an example. As mentioned above, the target media resource may further include, for example, an image emoji selected by the user. It should be understood that a similar process as described above may be used to support editing of a visual part of the image emoji and to support adding audio content to create a voice emoji.

In some embodiments, the target media resource may, for example, further include a voice emoji. In this case, the electronic device 110 may support the user to edit or replace the visual part of the voice emoji and/or edit or replace the voice part of the voice emoji.

For example, the user may choose to keep the visual part of an existing voice emoji, and may record a new voice part to generate a voice emoji. Alternatively, the user may choose to keep the visual part of the existing voice emoji, and may apply a specific voice style to the existing voice part to generate a voice emoji.

In some embodiments, the target media resource may further include audio content, for example, a voice. As an example, the electronic device 110 may receive the selection of the voice in the chat by the user, to determine the voice as the target media resource. Alternatively, the electronic device 110 may also receive a voice recorded by the user as the target media resource.

Accordingly, the electronic device 110 may, for example, support the user to add corresponding visual content. Similar to the content discussed above with reference to FIG. 3B, the electronic device 110 may provide a set of candidate images for selection by the user. In some examples, such candidate images may include images associated with the user. Alternatively, such candidate images may further include images generated or searched based on the voice.

Based on the process discussed above, the embodiments of the present disclosure are able to support the editing of media resources by the user to create voice emojis, thereby improving the production efficiency of voice emojis.

Continuing to refer to Fig. 2, at block 230, the electronic device 110 posts the voice emoji to enable the voice emoji to be sent to a chat associated with a target user based on a selection by the target user.

In some embodiments, based on a posting operation of the user, the electronic device 110 may post the created voice emoji accordingly.

In some examples, such a posting operation may include adding the voice emoji to an emoji panel. As shown in Fig. 3E, the electronic device 110 may display the posted voice emoji 350 in the emoji panel 300E accordingly, so that the voice emoji 350 may be sent to an associated chat.

In some examples, such a posting operation may include a sharing operation of the voice emoji. For example, the electronic device 110 may share the voice emoji with other users or groups based on the sharing request by the user. As an example, the user may share the voice emoji with other users or groups through private messages or comments.

Alternatively, the electronic device 110 may also post the voice emoji as a resource available to other users, based on the sharing request by the user. Other users may further add the voice emoji, for example, to support using such a voice emoji in a chat.

In yet another example, such a posting operation may include posting the voice emoji 350 as a work (also referred to as a second work), so that users may add the voice emoji 350 via the work. For example, an adding entry for adding an emoji may be provided in a viewing interface of the work, and the current user or others may add the voice emoji through the adding entry.

The usage process of the voice emoji will be described in detail below with reference to Fig. 4.

### Second Example Process

Fig. 4 illustrates a flowchart of an example process 400 of emoji interaction according to some embodiments of the present disclosure. The process 400 may be implemented at the electronic device 110. The process 400 is described below with reference to Fig. 1.

At block 410, the electronic device 110 receives a selection of a voice emoji.

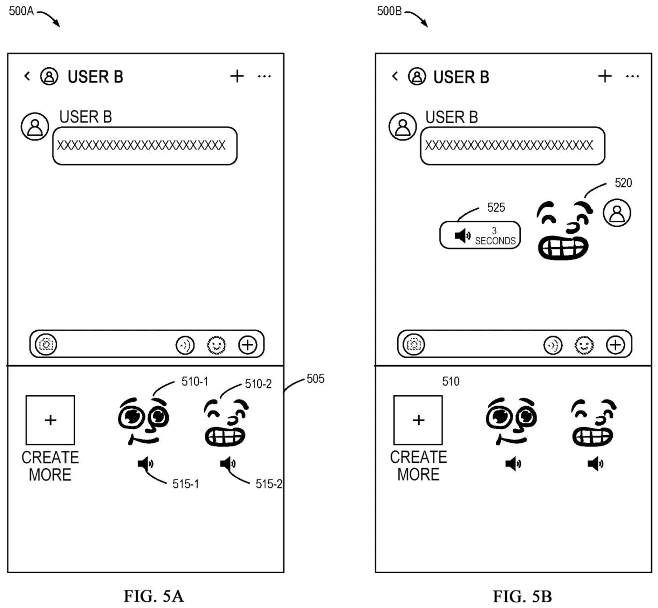

The process 400 will be described below with reference to FIGS. 5A and 5B. FIGS. 5A and 5B illustrate example interfaces 500A and 500B according to some embodiments of the present disclosure.

As shown in Fig. 5A, the interface 500A may be, for example, a chat interface of a chat (for example, a chat with "user B"). As shown in the figure, the electronic device 110 may, for example, display an emoji panel 505 in the interface 500A. The emoji panel 505 may select a set of voice emojis, for example, a voice emoji 510-1 and a voice emoji 510-2 (individually or collectively referred to as voice emojis 510). Such voice emojis 510 may be created, for example, based on the process described above with reference to Fig. 2.

As shown in Fig. 5A, the electronic device 110 may provide a corresponding preview entry 515-1 and 515-2 in association with the voice emoji 510-1 and 510-2.

In response to receiving a selection of the preview entry 515-1, for example, the electronic device 110 may play the voice part of the voice emoji 510-1.

Continuing to refer to Fig. 4, at block 420, the electronic device 110 may send the voice emoji to a target chat, the voice emoji including a visual part and a voice part.

Taking Fig. 5B as an example, in response to receiving the selection of the voice emoji 515-2 shown in Fig. 5A, the electronic device 110 may send the voice emoji 515-2 to the chat.

Specifically, the electronic device 110 may display the visual part 520 of the voice emoji 510-2 in the message window of the chat. In the case where the visual part 520 includes a dynamic image, the visual part 520 may be automatically played once or multiple times.

In some embodiments, the electronic device 110 may further display a play entry 525 for the voice emoji 510-2 in the message window. Further, in response to receiving a selection of the play entry 525, the electronic device 110 may play the voice part of the voice emoji 510-2.

In some embodiments, in the case where the visual part 520 includes a dynamic image, in response to the play entry 525 being triggered, the dynamic image may be replayed, for example, so that the dynamic image may be synchronized with the playing of the voice part.

It should be understood that for a receiver of the voice emoji, it may similarly view the visual part 520 of the voice emoji and play the voice part of the voice emoji based on the selection of the play entry 525.

### Third Example Process

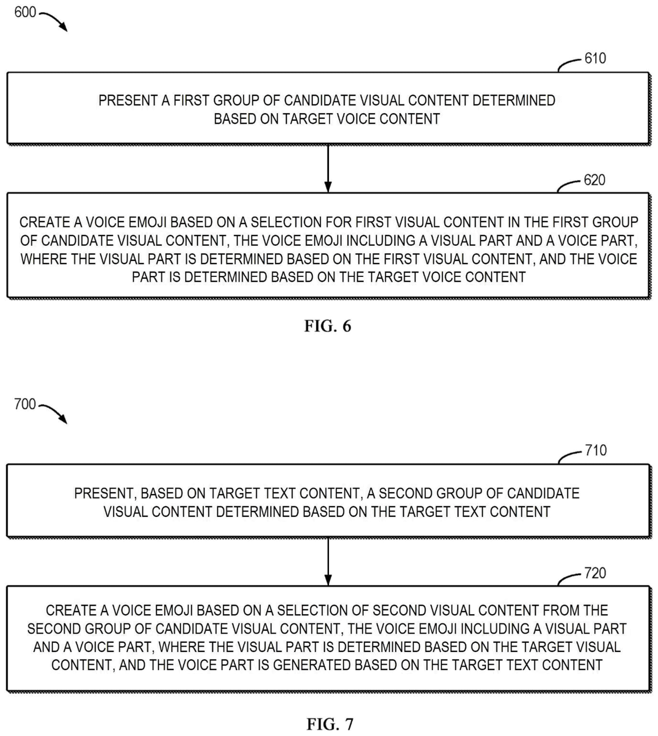

Fig. 6 illustrates a flowchart of an example process 600 of emoji creation according to some embodiments of the present disclosure. The process 600 may be implemented at the electronic device 110. The process 600 is described below with reference to Fig. 1.

As shown in the figure, at block 610, the electronic device 110 presents a first set of candidate visual content determined based on target voice content.

In some embodiments, the target voice content may include voice content input by the user. For example, the electronic device 110 may obtain voice content input by the user through a voice acquisition device.

In some embodiments, the target voice content may further include voice content selected by the user in other approach. For example, the electronic device 110 may receive a selection of a voice in a chat, to take the voice as the target voice content. Alternatively, the electronic device 110 may receive a selection of voice materials provided by other users or the platform, to take the voice material as the target voice content.

In some embodiments, the first set of candidate visual content provided by the electronic device 110 is generated based on text content corresponding to the target voice content. For example, the electronic device 110 may use any appropriate machine learning model to generate a set of candidate visual content corresponding to the text content, such as static images, dynamic images or videos.

At block 620, the electronic device 110 creates a voice emoji based on a selection for first visual content in the first set of candidate visual content, the voice emoji including a visual part and a voice part, where the visual part is determined based on the first visual content, and the voice part is determined based on the target voice content.

In some embodiments, the electronic device 110 may determine the voice part of the voice emoji based on the target voice content. For example, the target voice content itself may be used as the voice part of the voice emoji. Alternatively, the electronic device 110 may also apply a specific voice style to the target voice content to generate the voice part of the voice emoji.

In some embodiments, the electronic device 110 may determine the visual part of the voice emoji based on the selected first visual content. For example, the first visual content itself may be used as the visual part of the voice emoji. Alternatively, the electronic device 110 may also receive the editing operation by the user for the first visual content, and generate the visual part of the voice emoji accordingly.

Based on this approach, the embodiments of the present disclosure are able to support the user to efficiently create a matching voice emoji by recording voice.

### Fourth Example Process

Fig. 7 illustrates a flowchart of an example process 700 of emoji creation according to some embodiments of the present disclosure. The process 700 may be implemented at the electronic device 110. The process 700 is described below with reference to Fig. 1.

As shown in the figure, at block 710, the electronic device 110 presents, based on target text content, a second set of candidate visual content determined based on the target text content.

In some embodiments, the electronic device 110 may receive target text content input or selected by the user, for example, and may provide a second set of candidate visual content determined based on the target text content accordingly.

In some embodiments, the second group of candidate visual content may, for example, based on target text content, be searched from a visual content library. Alternatively, or in addition, the second set of candidate visual content may, for example, be generated based on the target text content. For example, the electronic device 110 may generate a set of candidate visual content corresponding to the text content by using any appropriate machine learning model, such as static images, dynamic images or videos.

At block 720, the electronic device 110 creates a voice emoji based on a selection of second visual content from the second set of candidate visual content, the voice emoji including a visual part and a voice part, where the visual part is determined based on the target visual content, and the voice part is generated based on the target text content.

In some embodiments, the electronic device 110 may determine the visual part of the voice emoji based on the selected first visual content. For example, the first visual content itself may be used as the visual part of the voice emoji. Alternatively, the electronic device 110 may also receive the editing operation by the user for the first visual content, and generate the visual part of the voice emoji accordingly.

In some embodiments, the electronic device 110 may generate the voice part of the voice emoji based on the target text content. For example, the electronic device 110 may provide a set of candidate voice styles. Further, the electronic device 110 may receive a selection of a target voice style in the set of candidate voice styles, such that the voice part of the voice emoji is generated based on the target voice style.

Based on this approach, the embodiments of the present disclosure are able to support the user to efficiently create a matching voice emoji by inputting text.

### Example Apparatus and Device

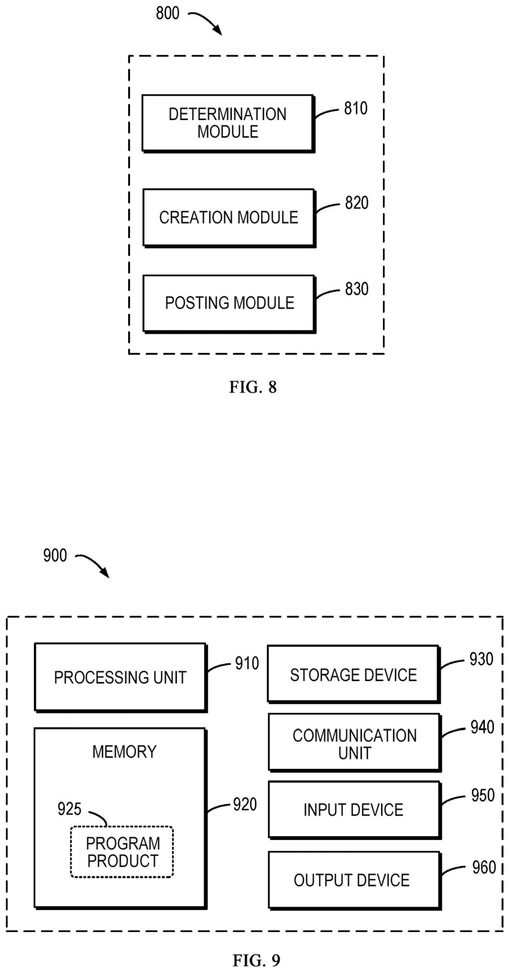

The embodiments of the present disclosure further provide corresponding apparatus for implementing the above methods or processes. Fig. 8 illustrates a schematic structural block diagram of an example apparatus 800 for emoji interaction according to some embodiments of the present disclosure. The apparatus 800 may be implemented as or included in the electronic device 110. Each module/component in the apparatus 800 may be implemented by hardware, software, firmware, or any combination thereof.

As shown in Fig. 8, the apparatus 800 includes a determination module 810 configured to determine a target media resource for generating a voice emoji; a creation module 820 configured to create the voice emoji based on a received editing operation, the voice emoji including a visual part and a voice part, the editing operation including at least one of: a first operation for modifying first visual content and/or first voice content included in the target media resource, or a second operation for inputting second visual content and/or second voice content; and a posting module 830 configured to post the voice emoji to enable the voice emoji to be sent to a chat associated with a target user based on a selection by the target user.

In some embodiments, the determination module 810 is further configured to: present a set of candidate images, the set of candidate images including a static image and/or a dynamic image; and based on a selection of a target image from the set of candidate images, determine the target image as the target media resource.

In some embodiments, the set of candidate images includes at least one of the following: an image favorited by a current user; or an image associated with a work posted by the current user.

In some embodiments, the visual part of the voice emoji is determined based on the target image.

In some embodiments, the apparatus 800 further includes a first receiving module configured to: receive the second operation for inputting the second voice content, where the voice part of the voice emoji is determined based on the second voice content.

In some embodiments, the apparatus 800 further includes a second receiving module configured to: receive the first operation for editing the target image, where the visual part of the voice emoji is determined based on the edited target image.

In some embodiments, the apparatus 800 further includes a style determination module configured to: provide a set of candidate voice styles; and receive a selection of a target voice style from the set of candidate voice styles, such that the voice part of the voice emoji matches the target voice style.

In some embodiments, the target image is a target dynamic image, and the voice part is configured to be played from a start frame of the target dynamic image.

In some embodiments, the determination module 810 is further configured to: present the set of candidate images based on a selection of a creation entry in an emoji panel.

In some embodiments, the determination module 810 is further configured to: present a set of candidate image emojis; and based on a selection of a target image emoji from the set of candidate image emojis, determine the target image emoji as the target media resource.

In some embodiments, the apparatus 800 further includes a second receiving module configured to: receive , via an editing interface, the second operation for inputting the second voice content, where the visual part of the voice emoji is determined based on the target image emoji, and the voice part is determined based on the second voice content.

In some embodiments, the determination module 810 is further configured to: determine a first work as the target media resource based on a preset operation associated with the first work; or obtain a picture or a video captured by a user, to serve as the target media content.

In some embodiments, the apparatus 800 further includes a sending module configured to: display the posted voice emoji in an emoji panel; and sending the voice emoji to the chat based on a selection of the voice emoji.

In some embodiments, the apparatus 800 further includes a play module configured to: display, in a message window of the chat, the visual part of the sent voice emoji and a play entry for the voice emoji; and play the voice part of the voice emoji based on a selection of the play entry.

In some embodiments, the apparatus 800 further includes a preview module configured to: providing, in association with the voice emoji, a preview entry in the emoji panel; and playing the voice part of the voice emoji based on a selection of the preview entry.

In some embodiments, the posting module 830 is further configured to perform at least one of the following: posting the voice emoji as a second work, where at least one user is enabled to add the voice emoji via the second work; adding the voice emoji, such that the voice emoji is available to a current user; or sharing the voice emoji with at least one user.

FIG. 9 illustrates a block diagram of an electronic device 900 in which one or more embodiments in the present disclosure may be implemented. It would be appreciated that the electronic device 900 illustrated in FIG. 9 is merely illustrative and should not constitute any limitation on the functionality and scope of the embodiments described herein. The electronic device 900 shown in FIG. 9 may be configured to implement the electronic device 110 in FIG. 1.

As shown in FIG. 9, the electronic device 900 is in the form of a general-purpose electronic device. Components of the electronic device 900 may include, but are not limited to, one or more processors or processing units 910, a memory 920, a storage device 930, one or more communication units 940, one or more input devices 950, and one or more output devices 960. The processing unit 910 may be an actual or virtual processor capable of performing various processes according to a program stored in the memory 920. In a multiprocessor system, a plurality of processing units execute computer-executable instructions in parallel to improve the parallel processing capabilities of electronic device 900.

The electronic device 900 typically includes a variety of computer storage media. Such media may be any available media that are accessible to the electronic device 900, including, but not limited to, volatile and non-volatile media, removable and non-removable media. The memory 920 may be a volatile memory (e.g., a register, cache, random access memory (RAM)), non-volatile memory (e.g., read-only memory (ROM), electrically erasable programmable read-only memory (EEPROM), flash memory), or some combination thereof. The storage device 930 may be a removable or non-removable medium and may include a machine-readable medium, such as a flash drive, magnetic disk, or any other medium that can be used to store information and/or data and that can be accessed within the electronic device 900.

The electronic device 900 may further include an additional removable/non-removable, volatile/non-volatile storage medium. Although not shown in FIG. 9, a disk drive for reading from or writing to a removable, non-volatile magnetic disk (e.g., a "floppy disk") or an optical disk drive for reading from or writing to a removable, non-volatile optical disk may be provided. In these cases, each drive may be connected to a bus (not shown) by one or more data media interfaces. The memory 920 may include a computer program product 925 having one or more program modules configured to execute various methods or actions of the various embodiments in the present disclosure.

The communication unit 940 is configured to communicate with other electronic devices through a communication medium. Additionally, the functionality of components of the electronic device 900 may be implemented by a single computing cluster or multiple computing machines capable of communicating through a communication connection. Thus, the electronic device 900 may operate in a networked environment using a logical connection with one or more other servers, network personal computers (PCs), or another network node.

The input device 950 may be one or more input devices such as a mouse, a keyboard, a trackball, or the like. The output device 960 may be one or more output devices, such as a display, a speaker, a printer, or the like. The electronic device 900 may also communicate with one or more external devices (not shown) through the communication unit 940 as needed. The external device, such as a storage device, a display device, etc., communicates with one or more devices that enable users to interact with the electronic device 900, or communicates with any device (e.g., a network card, a modem, etc.) that enables the electronic device 900 to communicate with one or more other electronic devices. Such communication may be performed via an input/output (I/O) interface (not shown).

According to example implementations in the present disclosure, a computer-readable storage medium having computer-executable instructions stored thereon is provided. The computer-executable instructions are executed by a processor to implement the method described above. According to example implementations in the present disclosure, a computer program product is further provided. The computer program product is tangibly stored on a non-transitory computer-readable medium and includes computer-executable instructions. The computer-executable instructions are executed by a processor to implement the method described above.

Various aspects in the present disclosure are described herein with reference to flowcharts and/or block diagrams of methods, apparatuses, devices, and computer program products implemented according to the present disclosure. It would be appreciated that each block of the flowchart and/or block diagram, and combinations of blocks in the flowcharts and/or block diagrams, may be implemented by computer readable program instructions.

These computer-readable program instructions may be provided to a processing unit of a general-purpose computer, special computer, or other programmable data processing apparatus to produce a machine that generates an apparatus to implement the functions/acts specified in one or more blocks in the flowchart and/or the block diagram when these instructions are executed through the processing units of the computer or other programmable data processing devices. These computer-readable program instructions may also be stored in a computer-readable storage medium. These instructions cause the computer, programmable data processing apparatus, and/or other devices to work in a specific way. Therefore, the computer-readable medium storing instructions includes an article of manufacture including instructions to implement aspects of the functions/acts specified in one or more blocks in the flowchart and/or block diagram(s).

The computer-readable program instructions may be loaded onto a computer, a programmable data processing apparatus, or a further device, such that a series of operational steps can be performed on the computer, programmable data processing apparatus, or the further device to produce a computer-implemented process. As such, the instructions executed on the computer, programmable data processing apparatus, or the further device implement the functions/acts specified in the one or more blocks in the flowchart and/or block diagram(s).

The flowchart and block diagrams in the drawings show the possible architecture, functions and operations of the system, the method, and the computer program product implemented according to various implementations in the present disclosure. In this regard, each block in the flowchart or block diagram may represent a part of a module, a program segment or instructions, which contains one or more executable instructions for implementing the specified logic function(s). In some alternative implementations, the functions marked in the blocks may also occur in a different order from those marked in the drawings. For example, two consecutive blocks may be executed in parallel, and sometimes can also be executed in a reverse order, depending on the function involved. It should also be noted that each block in the block diagram and/or the flowchart, and combinations of blocks in the block diagram and/or the flowchart, may be implemented by a dedicated hardware-based system that performs the specified functions or acts, or by a combination of a dedicated hardware and computer instructions.

Various implementations in the present disclosure have been described above. The above description is illustrative, not exhaustive, and the present application is not limited to the disclosed implementations. Without departing from the scope and spirit of the described implementations, many modifications and changes are obvious to those skilled in the art. The terminology used herein has been chosen to best explain the principles of the respective implementations, the practical applications or improvements to the technology in the marketplace, or to enable those skilled in the art to understand the implementations disclosed herein.

## Claims

1. A method for emoji interaction, comprising:
determining a target media resource for generating a voice emoji;
creating the voice emoji based on a received editing operation, the voice emoji comprising a visual part and a voice part, the editing operation comprising at least one of: a first operation for modifying first visual content and/or first voice content comprised in the target media resource, or a second operation for inputting second visual content and/or second voice content; and
posting the voice emoji to enable the voice emoji to be sent to a chat associated with a target user based on a selection by the target user.

2. The method of claim 1, wherein determining the target media resource for generating the voice emoji comprises:
presenting a set of candidate images, the set of candidate images comprising a static image and/or a dynamic image; and
based on a selection of a target image from the set of candidate images, determining the target image as the target media resource.

3. The method of claim 2, wherein the set of candidate images comprises at least one of the following:
an image favorited by a current user; or
an image associated with a work posted by the current user.

4. The method of claim 2, wherein the visual part of the voice emoji is determined based on the target image.

5. The method of claim 2, further comprising:
receiving the second operation for inputting the second voice content, wherein the voice part of the voice emoji is determined based on the second voice content.

6. The method of claim 5, further comprising:
receiving the first operation for editing the target image, wherein the visual part of the voice emoji is determined based on the edited target image.

7. The method of claim 5, further comprising:
providing a set of candidate voice styles; and
receiving a selection of a target voice style from the set of candidate voice styles, such that the voice part of the voice emoji matches the target voice style.

8. The method of claim 5, wherein the target image is a target dynamic image, and the voice part is configured to be played from a start frame of the target dynamic image.

9. The method of claim 2, wherein presenting the set of candidate images comprises:
presenting the set of candidate images based on a selection of a creation entry in an emoji panel.

10. The method of claim 1, wherein determining the target media resource for generating the voice emoji comprises:
presenting a set of candidate image emojis; and
based on a selection of a target image emoji from the set of candidate image emojis, determining the target image emoji as the target media resource.

11. The method of claim 10, further comprising:
receiving, via an editing interface, the second operation for inputting the second voice content, wherein the visual part of the voice emoji is determined based on the target image emoji, and the voice part is determined based on the second voice content.

12. The method of claim 1, wherein determining the target media resource for generating the voice emoji comprises:
determining a first work as the target media resource based on a preset operation associated with the first work; or
obtaining a picture or a video captured by a user, to serve as the target media content.

13. The method of claim 1, further comprising:
displaying the posted voice emoji in an emoji panel; and
sending the voice emoji to the chat based on a selection of the voice emoji.

14. The method of claim 13, further comprising:
displaying, in a message window of the chat, the visual part of the sent voice emoji and a play entry for the voice emoji; and
playing the voice part of the voice emoji based on a selection of the play entry.

15. The method of claim 13, further comprising:
providing, in association with the voice emoji, a preview entry in the emoji panel; and
playing the voice part of the voice emoji based on a selection of the preview entry.

16. The method of claim 1, wherein posting the target emoji comprises at least one of the following:
posting the voice emoji as a second work, wherein at least one user is enabled to add the voice emoji via the second work;
adding the voice emoji, such that the voice emoji is available to a current user; or
sharing the voice emoji with at least one user.

17. A method for emoji interaction, comprising:
receiving a selection of a voice emoji; and
sending the voice emoji to a target chat, the voice emoji comprising a visual part and a voice part,
wherein the voice emoji is created based on an editing operation associated with a target media resource, the editing operation comprising at least one of: a first operation for modifying first visual content and/or first voice content comprised in the target media resource, or a second operation for adding second visual content and/or second voice content.

18. The method of claim 17, wherein receiving the selection of the voice emoji comprises:
presenting an emoji panel in a chat interface of the target chat; and
receiving the selection of the voice emoji in the emoji panel.

19. The method of claim 18, further comprising:
providing, in association with the voice emoji, a preview entry in the emoji panel; and
playing the voice part of the voice emoji based on a selection of the preview entry.

20. The method of claim 17, further comprising:
displaying, in a message window of the target chat, the visual part of the sent voice emoji and a play entry for the voice emoji; and
playing the voice part of the voice emoji based on a selection of the play entry.

21. A method for emoji creation, comprising:
presenting a first set of candidate visual content determined based on target voice content; and
creating a voice emoji based on a selection for first visual content in the first set of candidate visual content, the voice emoji comprising a visual part and a voice part, wherein the visual part is determined based on the first visual content, and the voice part is determined based on the target voice content.

22. The method of claim 21, wherein the first set of candidate visual content is generated based on text content corresponding to the target voice content.

23. A method for emoji creation, comprising:
presenting, based on target text content, a second set of candidate visual content determined based on the target text content; and
creating a voice emoji based on a selection of second visual content from the second set of candidate visual content, the voice emoji comprising a visual part and a voice part, wherein the visual part is determined based on the target visual content, and the voice part is generated based on the target text content.

24. The method of claim 23, further comprising:
providing a set of candidate voice styles; and
receiving a selection of a target voice style in the set of candidate voice styles, such that the voice part of the voice emoji is generated based on the target voice style.

25. An apparatus for emoji interaction, comprising:
a determination module configured to determine a target media resource for generating a voice emoji;
a creation module configured to create the voice emoji based on a received editing operation, the voice emoji comprising a visual part and a voice part, the editing operation comprising at least one of: a first operation for modifying first visual content and/or first voice content comprised in the target media resource, or a second operation for inputting second visual content and/or second voice content; and
a posting module configured to post the voice emoji to enable the voice emoji to be sent to a chat associated with a target user based on a selection by the target user.

26. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 16, the method of any of claims 17 to 20, the method of any of claims 21 to 22, or the method of any of claims 23 to 24.

27. A computer-readable storage medium having a computer program stored thereon, the computer program being executable by a processor to implement the method of any of claims 1 to 16, the method of any of claims 17 to 20, the method of any of claims 21 to 22, or the method of any of claims 23 to 24.
